# FASCICULE DE BREVET EUROPEEN

(11) **EP 1 067 025 B1**
(45) Date de publication et mention de la délivrance du brevet: **26.03.2003**
(21) Numéro de dépôt: 00401911.3
(22) Date de dépôt: 04.07.2000
(51) Int. Cl.: B60R 19/44

(54) **Bandeau de pare-chocs et pare-chocs muni d'un tel bandeau**
Stossfänger-Schutzleiste und mit einer solchen Schutzleiste ausgerüsteter Stossfänger
Bumper guard strip and bumper comprising such a guard strip

(30) Priorité: 06.07.1999 FR 9908689
(43) Date de publication de la demande: 10.01.2001
(73) Titulaire: COMPAGNIE PLASTIC OMNIUM, 69007 Lyon (FR)
(72) Inventeur: Devilliers, Olivier, 52600 Chalendrey (FR)
(74) Mandataire: Leszczynski, André

(56) Documents cités:
- EP-A- 0 343 546
- DE-A- 2 934 458
- DE-A- 3 125 650
- DE-A- 19 616 958
- GB-A- 2 030 082
- US-A- 4 966 245

## Description

La présente invention concerne un bandeau de pare-chocs et un pare-chocs équipé d'un tel bandeau.

Il est connu de protéger un pare-chocs de véhicule automobile par un bandeau qui se situe généralement sur une zone de la peau du pare-chocs la plus exposée aux frottements avec des obstacles tels que des pare-chocs d'autres véhicules, notamment lors des manoeuvres de stationnement. Ce bandeau peut être de la couleur du pare-chocs ou d'une couleur différente, selon l'esthétique du véhicule.

La fixation d'un tel bandeau s'effectue généralement par encliquetage, le bandeau comportant à cet effet, sur ses bords longitudinaux, des languettes élastiques qui pénètrent dans des fentes de la peau du pare-chocs.

Les languettes élastiques s'étendent horizontalement vers l'intérieur du véhicule et font saillie de la face intérieure de la peau du pare-chocs. Leur débattement vertical leur permet de s'accrocher à la peau, par retour élastique en direction de l'extérieur du bandeau, c'est-à-dire vers le haut pour les languettes du bord longitudinal supérieur du bandeau et vers le bas pour les languettes du bord longitudinal inférieur du bandeau. DE 196 16 958 décrit un tel bandeau et sert de base pour la présentation en deux parties de la revendication 1.

Ce mode de fixation assure la retenue du bandeau mais présente quelques inconvénients.

Tout d'abord, on a constaté que le bandeau a tendance à se rétracter après moulage en se refermant sur lui-même en section verticale, de sorte que les languettes des bords supérieur et inférieur du bandeau se rapprochent les unes des autres, leur accrochage à la peau du pare-chocs s'en trouvant fragilisé.

Pour essayer de résoudre ce problème, on ajoute des godrons sur la peau pour soutenir les languettes horizontalement et les empêcher de se rapprocher lors du retrait du bandeau, mais ces godrons rendent la mise en place du bandeau plus difficile.

De plus, la place disponible à l'intérieur de la peau du pare-chocs ne permet pas toujours de laisser dépasser les languettes d'encliquetage. En effet, une traverse métallique renforçant le pare-chocs est souvent disposée au plus près de la peau de ce dernier, ce qui oblige, si l'on veut fixer un bandeau, à prévoir des perçages dans la traverse pour loger les languettes élastiques.

La présente invention vise à fournir un nouveau bandeau de pare-chocs dont l'accrochage sur la peau d'un pare-chocs ne présente pas les inconvénients rappelés ci-dessus.

La présente invention a pour objet un bandeau de pare-chocs de véhicule automobile selon la revendication 1.

Le bandeau selon l'invention ne comporte aucune languette d'accrochage prolongeant ses bords longitudinaux, qui ferait saillie de la face intérieure de la peau du pare-chocs lorsque le bandeau est monté sur cette peau.

Par conséquent, si une traverse doit se trouver à proximité immédiate de la peau du pare-chocs, la présence d'un bandeau selon l'invention n'exige aucun perçage de cette traverse.

Les bossages du bandeau jouent le rôle des languettes élastiques des bandeaux antérieurs, mais, dans le bandeau selon l'invention, les bossages sont rigides et c'est le bandeau qui, par élasticité sur toute sa hauteur, permet le débattement vertical de ses bords longitudinaux et, ainsi, le dégagement des bossages lors du montage du bandeau sur le pare-chocs.

De ce fait, le bandeau selon l'invention ne peut être altéré par un éventuel retrait qui pourrait le refermer sur lui-même car une telle modification de sa géométrie n'aurait pour effet que de renforcer son accrochage sur la peau du pare-chocs.

Le bandeau selon l'invention présente en outre un avantage lié à sa fabrication par moulage.

En effet, alors que le bandeau antérieurement connu nécessitait un moule relativement complexe du fait de la présence des languettes élastiques dont le démoulage exigeait des mouvements de certaines parties du moule avant éjection du bandeau, tel n'est plus le cas avec le bandeau selon l'invention car les bossages des bords longitudinaux du bandeau peuvent sortir de l'empreinte du moule par déformation élastique de la totalité du bandeau, de la même manière que lorsqu'on démonte le bandeau d'un pare-chocs sur lequel il a été encliqueté.

La présente invention a également pour objet un pare-chocs agencé pour recevoir un bandeau tel que décrit ci-dessus, ce pare-chocs étant caractérisé par le fait que sa peau comporte deux gorges longitudinales sur sa face extérieure, pour recevoir chacune un bord longitudinal du bandeau, l'une au moins de ces gorges étant délimitée intérieurement par une patte élastique découpée dans la peau, cette patte élastique pouvant se déformer de façon élastique pour s'effacer lors de l'introduction d'un bossage du bandeau mais assurant, par retour élastique, la rétention dudit bossage après son introduction.

Dans le but de mieux faire comprendre l'invention, on va en décrire maintenant un mode de réalisation donné à titre d'exemple non limitatif de la portée de l'invention, en référence au dessin annexé dans lequel :
- la figure 1 est une vue en perspective de l'intérieur d'une portion de bandeau de pare-chocs selon un mode de réalisation de l'invention,
- la figure 2 est une vue rapprochée et en coupe selon II-II de la figure 1,
- la figure 3 est une section selon II-II de la figure 1,
- la figure 4 est une section selon IV-IV de la figure 1,
- la figure 5 est une vue en perspective d'une région de la peau du pare-chocs indiquée par la flèche V sur la figure 3.

Le bandeau de pare-chocs 1 représenté sur le dessin présente une section verticale en C.

Chacun de ses deux bords longitudinaux 2 s'étend horizontalement sur toute sa longueur.

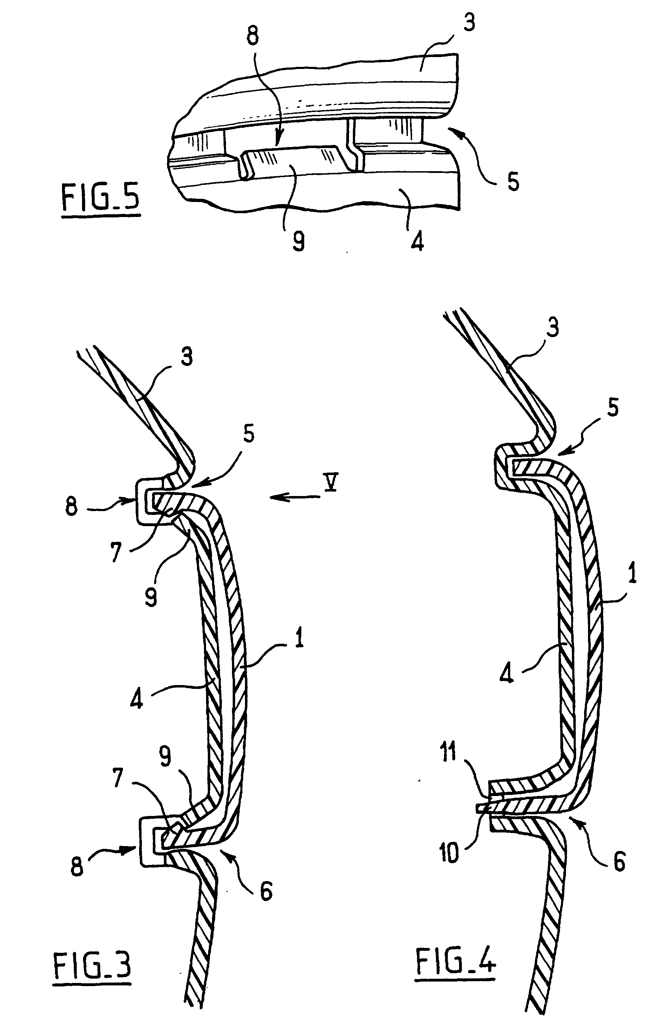

Le bandeau est destiné à venir recouvrir une bande centrale 4 d'un pare-chocs dont la peau 3, visible sur les figures 3 et 4, comporte deux gorges longitudinales 5, 6 formant des lignes de style dans lesquelles se logent les deux bords longitudinaux 2 du bandeau.

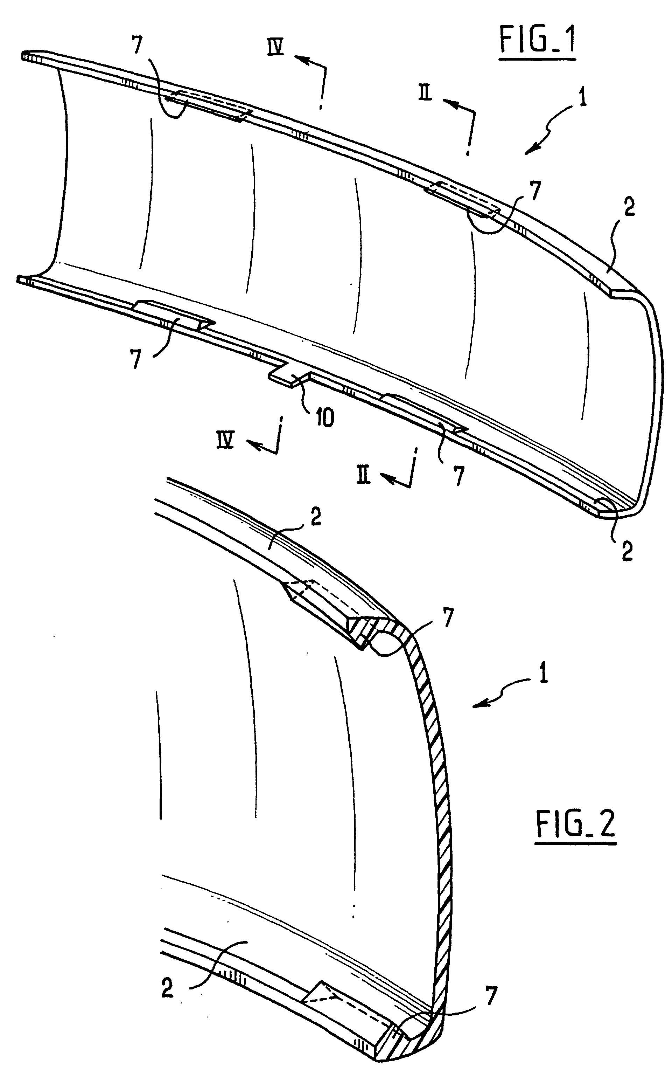

Comme on le voit notamment sur la vue rapprochée de la figure 2, chaque bord longitudinal 2 du bandeau comporte, sur sa face intérieure dirigée vers l'autre bord longitudinal, un bossage 7 de section sensiblement triangulaire s'étendant longitudinalement sur une longueur relativement réduite.

Dans l'exemple représenté, le bandeau comporte quatre bossages 7.

Le bandeau 1 étant réalisé par moulage de matière plastique, les bossages 7 sont issus directement du moulage. A cet effet, l'empreinte du moule utilisé est seulement définie par un poinçon, muni de creux correspondant aux bossages et une matrice enveloppant le poinçon, sans qu'aucune autre partie mobile du moule ne soit nécessaire. L'élasticité du bandeau sur toute sa hauteur permet en effet d'écarter ses deux bords longitudinaux l'un de l'autre pour dégager ses bossages des creux du poinçon et l'éjecter du moule.

Comme on le voit notamment à la figure 5, chaque gorge 5, 6 de la peau 3 du pare-chocs comporte, dans des zones correspondant aux bossages du bandeau, des découpes 8 du fonds de gorge définissant une patte élastique 9 qui borde la gorge intérieurement, c'est-à-dire du côté de son embouchure dirigée vers l'autre gorge.

Chacune de ces pattes élastiques 9 est apte à se déformer en se courbant vers l'intérieur du pare-chocs pour dégager le passage aux bossages 7 du bandeau, lors de la mise en place de ce dernier sur la peau du pare-chocs. Une fois les bossages 7 introduits au-delà des pattes élastiques 9, ces dernières reviennent dans leur position initiale, visible sur la figure 3, dans laquelle elles immobilisent les bossages.

Les bords longitudinaux 2 du bandeau 1 sont ainsi immobilisés au fond des gorges et le bandeau est monté sur le pare-chocs.

Comme on le voit aux figures 1 et 4, le bandeau comporte, au milieu de son bord longitudinal 2 inférieur, une languette de positionnement 10 qui pénètre dans un trou 11 ménagé au fond de la gorge inférieure de la peau, au milieu de cette dernière. Cette languette 10 permet de présenter le bandeau 1 sur la peau 3 du pare-chocs dans une position telle que les bossages 7 se trouvent en regard des pattes élastiques 9.

Le démontage du bandeau s'effectue en déformant les pattes élastiques 9 depuis l'intérieur du pare-chocs lorsque ce dernier est déposé du véhicule.

Il est bien entendu que le mode de réalisation qui vient d'être décrit ne présente aucun caractère limitatif et qu'il pourra recevoir toute modification désirable sans sortir pour cela du cadre de l'invention.

## Revendications

1. Bandeau de pare-chocs de véhicule automobile, ledit bandeau (1) présentant une section verticale en C et étant apte à être fixée audit pare-chocs par encliquetage le long de ses bords longitudinaux (2) qui comportent au moins un bossage (7) **caractérisé par le fait que** ledit bossage est dirigé vers l'intérieur du C.

2. Bandeau de pare-chocs selon la revendication 1, **caractérisé par le fait que** les bossages (7) présentent une section sensiblement triangulaire.

3. Pare-chocs agencé pour recevoir un bandeau (1) selon l'une quelconque des revendications 1 et 2, **caractérisé par le fait que** sa peau (3) comporte deux gorges longitudinales (5,6) sur sa face extérieure, pour recevoir chacune un bord longitudinal (2) du bandeau (1), l'une au moins de ces gorges (5,6) étant délimitée intérieurement par une patte élastique (9) découpée dans la peau (3), cette patte élastique pouvant se déformer de façon élastique pour s'effacer lors de l'introduction d'un bossage (7) du bandeau mais assurant, par retour élastique, la rétention dudit bossage (7) après son introduction.

## Patentansprüche

1. Schutzleiste eines Stossfängers für ein Kraftfahrzeug, welche Schutzleiste (1) in einem vertikalen Schnitt C-Form aufweist und geeignet ist, an den Stossfängern durch Einklipsen entlang ihrer longitudinalen Ränder, welche mindestens einen Vorsprung (7) aufweisen, befestigt zu werden, **dadurch gekennzeichnet, dass** dieser Vorsprung (7) zum Inneren des C gerichtet ist.

2. Schutzleiste eines Stossfängers nach Anspruch 1, **dadurch gekennzeichnet, dass** die Vorsprünge (7) einen im wesentlichen dreieckförmigen Querschnitt aufweisen.

3. Stossfänger, der ausgebildet ist für die Aufnahme einer Schutzleiste (1) nach einem beliebigen der Ansprüche 1 und 2, **dadurch gekennzeichnet, dass** sein Hautbereich (3) zwei längliche Vertiefungen (5, 6) auf seiner Außenfläche aufweist, um mit jeder von ihnen einen longitudinalen Randbereich (2) der Schutzleiste (1) aufzunehmen, wobei zumindest eine dieser Vertiefungen (5, 6) intern durch einen elastischen Lappen (9) begrenzt ist, der aus dem Hautbereich (3) feigeschnitten ist, dieser elastische Lappen kann sich in elastischer Weise deformieren, um während des Einfügens eines Vorsprungs (7) der Schutzleiste den Weg freizugeben, wobei aber durch elastische Rückstellung sicher gestellt ist, dass der Halt dieses Vorsprungs (7) nach seinem Einfügen gewährleistet ist.

## Claims

1. Motor vehicle bumper guard strip, the said guard strip (1) having a C-shaped vertical cross section and being able to be fixed to the said bumper by clip-fastening along its longitudinal edges (2) which comprise at least one boss (7), **characterized in that** the said boss is directed towards the inside of the C.

2. Bumper guard strip according to Claim 1, **characterized in that** the bosses (7) have a substantially triangular cross section.

3. Bumper designed to receive a guard strip (1) according to either one of Claims 1 and 2, **characterized in that** its skin (3) has two longitudinal grooves (5, 6) on its exterior face, each one to accommodate one longitudinal edge (2) of the guard strip (1), at least one of these grooves (5, 6) being internally delimited by an elastic tab (9) cut in the skin (3), this elastic tab being able to deform elastically in order to move aside as a boss (7) of the guard strip is being introduced but, by elastic return, retaining the said boss (7) once it has been introduced.
